# EUROPEAN PATENT SPECIFICATION

(11) **EP 3 591 667 B1**
(45) Date of publication and mention of the grant of the patent: **22.11.2023**
(21) Application number: 18760714.8
(22) Date of filing: 05.03.2018
(51) Int. Cl.: G21B 1/13

(54) **VACUUM VESSEL FOR A THERMONUCLAR REACTOR**
VAKUUMGEFÄSS FÜR EINEN THERMONUKLAREN REAKTOR
ENCEINTE À VIDE POUR UN RÉACTEUR THERMONUCLÉAIRE

(30) Priority: 02.03.2017 RU 2017106987
(43) Date of publication of application: 08.01.2020
(73) Proprietor: State Atomic Energy Corporation "Rosatom" on Behalf of The Russian Federation, Moscow 119017 (RU)
(72) Inventor: KOLGANOV, Vladimir Yuryevich, Moscow 115477 (RU); PODDUBNYY, Ivan Igorevich, Likino-Dulevo, Moskovskaya obl. 142671 (RU)
(74) Representative: Mutlu, Aydin
(86) International application number: PCT/RU2018/000128
(87) International publication number: WO 2018/160101

(56) References cited:
- JP-A- 2004 239 807
- RU-C1- 2 491 663
- RU-C2- 2 220 463
- RU-U1- 30 023
- RU-U1- 30 023
- US-A- 4 729 865
- S. KHOMIAKOV ET AL: "ITER blanket module connectors. Design, analysis and testing for procurement arrangement", FUSION ENGINEERING AND DESIGN, vol. 109-111, 1 November 2016 (2016-11-01) , pages 261-266, XP055594445, NL ISSN: 0920-3796, DOI: 10.1016/j.fusengdes.2016.03.015

## Description

### Field of the Invention

The invention relates to the field of thermonuclear fusion and can be used in devices for fastening a blanket module to the vacuum vessel of a fusion reactor.

### Prior Art

A device is known for fastening a blanket module to the vacuum vessel of a thermonuclear reactor, comprising a support with flexible rod elements installed between flanges, wherein the support is connected by one of the flanges to the blanket module and mounted by the other flange in a threaded mounting seat in the vacuum vessel (RF Patent No. 2491663, IPC G21B1/13, published on 08/27/2013).

In the known device, the flexible rod elements (spokes) are equally spaced around the periphery (outer circumference) of the flanges to form an internal cavity, within which a bolt is located with its head facing the vacuum vessel and its threaded portion connected to the module. The support flanges are provided with an external thread, wherein one of the flanges forms a threaded connection with the mounting seat of the vessel, and the other flange forms a threaded connection with the module by means of a bolt and an offset compensator.

One disadvantage of the known device for fastening a blanket module to the vacuum vessel of a thermonuclear reactor is the complexity and length of installation operations for mounting the blanket module in the vacuum vessel, due to the fact that compensating for assembly errors in plan view in two coordinates is impossible. Thus, any deviations in the manufactured part necessitate additional machining of each assembly in situ. Furthermore, another disadvantage of the known device is the loosening of the threaded connection between the flange of the flexible support and the vacuum vessel under cyclic loading conditions typical for operation of the blanket, due to the absence of locking elements in the said threaded connection. Reducing the tightening force of the threaded connection leads to a sharp decrease in the cyclic strength of the connection and its breakdown.

The closest equivalent to the claimed invention in terms of its aggregate of substantial features is a device for fastening a blanket module to the vacuum vessel of a thermonuclear reactor, comprising a support with flexible rod elements installed between flanges, wherein the support is connected by one of the flanges to the blanket module, mounted by the other flange in a threaded mounting seat of the vacuum vessel, and coupled thereto by means of a resilient clamping sleeve mounted on the support so as to provide contact with the inner surface of the support flange facing the vacuum vessel and forming a threaded connection with the mounting seat of the vessel (RF Patent No. 30023, IPC G21B1/00, published on 06/10/2003).

In the known device, the flexible rod elements (spokes) are equally spaced around the periphery (outer circumference) of the flanges to form an internal cavity, within which a bolt is located with its head facing the vacuum vessel and its threaded portion connected to the module. The support flange facing the vessel is provided with a shoulder, which is mounted in the mounting seat of the vacuum vessel without a gap. The end of the resilient clamping sleeve facing the base of the mounting seat is provided with holes to impart elastic properties to the sleeve. The known device provides the required cyclic strength for the connection by retaining the tightening force of the support in the mounting seat of the vacuum vessel by means of the resilient clamping sleeve.

One disadvantage of the known device for fastening a blanket module to the vacuum vessel of a thermonuclear reactor is the complexity and length of installation operations for mounting the blanket module on the vacuum vessel. This is due to the fact that additional machining of each assembly in situ is required because compensating for errors in the installation of the blanket module on the vacuum vessel in plan view in two coordinates is impossible due to the position of the support flange in the mounting seat of the vacuum vessel with no gap and the inability of the support flange to perform radial movement, as well as due to the enlarged transverse dimension (in plan view) of the device, which has to be mounted in the restricted conditions of the mounting seat of the vacuum vessel.

### Summary of the Invention

Implementation of the present invention can solve the technical problem arising from the difficulty of mounting the module on the vacuum vessel of the thermonuclear reactor in the restricted conditions of the mounting seat of the vacuum vessel, and simplify and accelerate the installation operations.

The technical result of the present invention is that of providing plan view dual-axis tolerance during the installation of a blanket module on a vacuum vessel under the restricted conditions arising from the position of the mounting seat on the vacuum vessel by reducing the transverse dimension (in plan view) of the device and allowing free radial movement during the mounting of the support flange in the mounting seat (prior to tightening).

The said technical result is achieved by the fact that, in the known device for fastening a blanket module to the vacuum vessel of a thermonuclear reactor including a support comprising flexible rod elements installed between two flanges, wherein the support is connected by one of the flanges to the blanket module, mounted by the other flange in a threaded mounting seat of the vacuum vessel and coupled thereto with a threaded connection by means of a resilient clamping sleeve mounted on the support so as to provide contact with the inner surface of the support flange facing the vacuum vessel, according to the claimed invention, the flexible rod elements of the support are arranged in the central portion of the flanges in the form of a bundle, and the diameter of the support flange facing the vacuum vessel and the diameter of the mounting seat are selected so that a radial expansion gap is formed between the flange and the mounting seat during mounting.

As compared with the known prototype device, the device implementing the claimed aggregate of substantial features provides compensation for errors in installation of the blanket module on the vacuum vessel in plan view in two coordinates by reducing the transverse dimension (in plan view) of the device and thereby freeing up space in the mounting seat of the vacuum vessel, as well as by enabling movement of the support flange in the adjusting radial (annular) gap between the mounting seat of the vacuum vessel and the flange during installation (prior to tightening), and thereby creating the necessary alignment of the support and the fastening point of the module. The arrangement of the flexible rod elements of the support in the central portion of the flanges in the form of a bundle allows for compact placement of the resilient clamping sleeve on the vacant area of the support flange, thereby reducing the transverse dimension (in plan view) of the device as compared to the prototype.

### Description of Figures

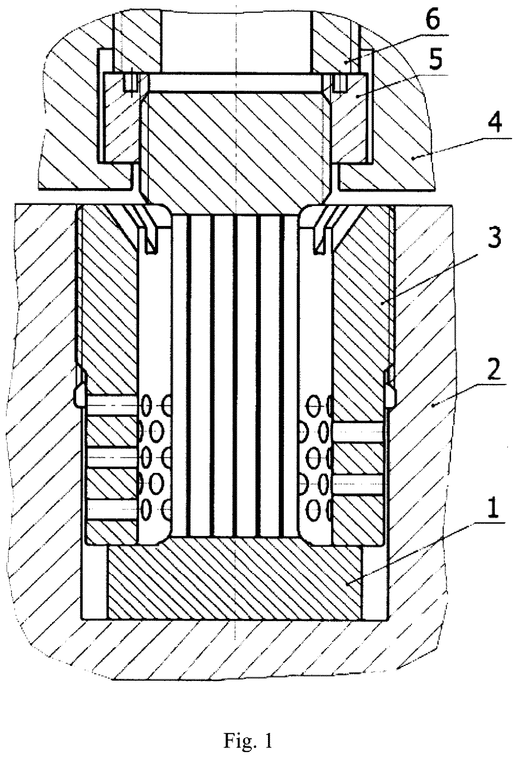

The essence of the invention is illustrated by the drawing, which shows the device for fastening a blanket module to the vacuum vessel of a thermonuclear reactor (general view, cross-section view).

### The Best Embodiment of the Invention

The device for fastening a blanket module to the vacuum vessel of a thermonuclear reactor comprises a support 1 with two flanges, wherein the support 1 is mounted by one of the flanges in a threaded mounting seat of the vacuum vessel 2. The diameter of the support flange 1 facing the vacuum vessel 2 and the diameter of the mounting seat are selected such that a radial expansion gap is formed between the flange and the mounting seat during mounting. The size of the radial expansion gap is determined by calculation using the known procedures. The support 1 comprises flexible rod elements that are installed between the flanges and arranged in the form of a bundle in the central portion of the flanges. A resilient clamping sleeve 3 is mounted on the support 1, wherein a portion of the outer surface of the sleeve is provided with a thread. The end of the resilient clamping sleeve 3 facing the base of the mounting seat is provided with holes to impart elastic properties to the resilient clamping sleeve 3. The resilient clamping sleeve 3 is mounted on the support 1 so as to provide contact with the inner surface of the flange of support 1, which flange faces the vacuum vessel 2 and is located in the annular space between the bundle of flexible rod elements and the lateral surface of the mounting seat of the vacuum vessel 2. A portion of the outer surface of the resilient clamping sleeve 3 forms a threaded connection with the mounting seat of the vacuum vessel 2. By the other flange facing the blanket module 4 and provided with an external thread, the support 1 is connected to the blanket module 4 by means of a connecting sleeve 5 and a locking sleeve 6.

### Industrial Applicability

The blanket module in mounted on the vacuum vessel of a thermonuclear reactor as follows.

The support 1 is mounted in the mounting seat of the vacuum vessel 2 in the required position according to the coordinates in plan view. The support 1 is fixed with the resilient clamping sleeve 3 by creation of the required tightening force. The resilient clamping sleeve 3 is locked to prevent self-unscrewing using the known methods (center-punching, wire, screw and tab washer, etc.) The blanket module 4 is moved toward the vacuum vessel 2 while the axis of the support 1 and the mounting hole of the blanket module 4 are aligned. The connecting sleeve 5 is screwed onto the threaded end of the support 1 until the axial position of the blanket module 4 required by the mounting conditions is reached. The connection is fixed with the locking sleeve 6.

The device operates as follows.

During operation of the thermonuclear reactor, cyclic dynamic loads caused by plasma disruptions act upon the blanket module 4. The support 1 takes up the compressive and tensile components of the external load generated at the location of the fastening device, while the force from the blanket module 4 is transferred to the vacuum vessel 2. The compressive component of the force from the blanket module 4 is transferred to the vacuum vessel 2 through the locking sleeve 6, the connecting sleeve 5, and the support 1, wherein the flange end surface whereof rests upon the bottom of the mounting seat of the vacuum vessel 2. The tensile component of the force from the blanket module 4 is transferred to the support 1 through the connecting sleeve 5; this component of the force is then transferred from the support 1 to the vacuum vessel 2 through the resilient clamping sleeve 3.

## Claims

1. A vacuum vessel (2) for a thermonuclear reactor provided with a device fastening a blanket module (4) to the vacuum vessel (2), including a support (1) comprising flexible rod elements installed between two flanges,
wherein the support (1) is connected by a first flange provided with an external thread to the blanket module (4) and mounted by a second flange in a threaded mounting seat of the vacuum vessel (2) and coupled thereto with a threaded connection by means of a resilient clamping sleeve (3) mounted on the support (1) so as to provide contact with the inner surface of the second flange of the support (1) facing the vacuum vessel (2), whereby the flexible rod elements of the support (1) are arranged in the central portion of the flanges in the form of a bundle, and the diameter of the second flange of the support (1) facing the vacuum vessel (2) and the diameter of the mounting seat are selected so that a radial expansion gap is formed between the flange and the mounting seat during mounting,
**characterized in that**
the support (1) is be connected to the blanket module (4) by means of a connecting sleeve (5) and a locking sleeve (6).

## Patentansprüche

1. Vakuumbehälter (2) für einen thermonuklearen Reaktor, der mit einer Vorrichtung zur Befestigung eines Deckenmoduls (4) an den Vakuumbehälter (2) ausgestattet ist, wobei der Vakuumbehälter einen Träger (1) umfasst, der zwischen zwei Flanschen angebrachte flexible Stabelemente umfasst, wobei der Träger (1) durch einen ersten Flansch, der mit einem Außengewinde versehen ist, mit dem Deckenmodul (4) verbunden ist, und durch einen zweiten Flansch in einem mit einem Gewinde versehenen Montagesitz des Vakuumbehälters (2) montiert ist und daran mit einer Gewindeverbindung mittels einer auf dem Träger (1) montierten elastischen Klemmhülse (3) gekoppelt ist, um so einen Kontakt mit der Innenfläche des zweiten Flansches des Trägers (1), der dem Vakuumbehälter (2) zugewandt ist, bereitzustellen, wobei die flexiblen Stabelemente des Trägers (1) in dem zentralen Bereich der Flansche in Form eines Bündels angeordnet sind und wobei der Durchmesser des zweiten Flansches des Trägers (1), der dem Vakuumbehälter (2) zugewandt ist, und der Durchmesser des Montagesitzes so gewählt sind, dass eine radiale Ausdehnungslücke zwischen dem Flansch und dem Montagesitz während der Montage ausgebildet wird,
**dadurch gekennzeichnet, dass** der Träger (1) mit dem Deckenmodul (4) mittels einer Verbindungshülse (5) und einer Verriegelungshülse (6) verbunden ist.

## Revendications

1. Chambre à vide (2) pour un réacteur thermonucléaire pourvue d'un dispositif assujettissant un module de couverture (4) à la chambre à vide (2), incluant un support (1) comprenant des éléments formant tiges flexibles installés entre deux brides, le support (1) étant raccordé par une première bride pourvue d'un filetage externe au module de couverture (4) et monté par une seconde bride dans un siège de montage taraudé de la chambre à vide (2) et accouplé à celui-ci avec un raccord vissé au moyen d'un manchon de serrage résilient (3) monté sur le support (1) de façon à assurer un contact avec la surface interne de la seconde bride du support (1) faisant face à la chambre à vide (2), dans laquelle les éléments formant tiges flexibles du support (1) sont agencés dans la partie centrale des brides sous la forme d'un faisceau, et le diamètre de la seconde bride du support (1) faisant face à la chambre à vide (2) et le diamètre du siège de montage sont sélectionnés de telle sorte qu'un jeu de dilatation radial soit formé entre la bride et le siège de montage durant le montage,
**caractérisée en ce que** le support (1) est raccordé au module de couverture (4) au moyen d'un manchon de raccordement (5) et d'un manchon de blocage (6).
